# EUROPEAN PATENT APPLICATION

(11) **EP 4 697 439 A1**
(43) Date of publication of application: **18.02.2026**
(21) Application number: 24863960.1
(22) Date of filing: 09.01.2024
(51) Int. Cl.: H01M 10/0587, H01M 50/181

(54) **BATTERY AND ELECTRONIC DEVICE**

(30) Priority: 12.09.2023 CN 202322482921 U
(71) Applicant: Huawei Technologies Co., Ltd., Shenzhen, Guangdong 518129 (CN)
(72) Inventor: CHEN, Ken, Shenzhen, Guangdong 518129 (CN); SUN, Chenlu, Shenzhen, Guangdong 518129 (CN); LIU, Hongwei, Shenzhen, Guangdong 518129 (CN); YANG, Decao, Shenzhen, Guangdong 518129 (CN); WANG, Chunge, Shenzhen, Guangdong 518129 (CN)
(74) Representative: Grünecker Patent- und Rechtsanwälte PartG mbB
(86) International application number: PCT/CN2024/071279
(87) International publication number: WO 2025/055226

(57) **Abstract**

A battery and an electronic device are provided. A battery cell of the battery includes a housing, a roll core, a positive electrode tab, and a negative electrode tab, and the roll core is disposed inside the housing and is formed by winding a negative electrode plate, separators, and a positive electrode plate. In a circumference direction of the roll core, the positive electrode tab is electrically connected to the positive electrode plate at a first location, and the negative electrode tab is electrically connected to the negative electrode plate at a second location, where a winding end of the positive electrode plate extends beyond a winding end of the negative electrode plate, and the first location is any location at which the positive electrode plate extends beyond the winding end of the negative electrode plate. A part of the positive electrode plate between the second location and the first location is a positive electrode extension section, at least an inner surface of the positive electrode extension section is passivated, and the inner surface is a surface of a side that is of the positive electrode extension section and that faces the negative electrode plate. In this way, a magnetic field of the roll core can be properly controlled, impact of an eddy current magnetic field can be effectively reduced, and a security risk can be avoided.

## Description

This application claims priority to Chinese Patent Application No. 202322482921.3, filed with the China National Intellectual Property Administration on September 12, 2023 and entitled "BATTERY AND ELECTRONIC DEVICE", which is incorporated herein by reference in its entirety.

### TECHNICAL FIELD

Embodiments of this application relate to the field of electronic technologies, and in particular, to a battery and an electronic device.

### BACKGROUND

With compact sizes and being easy to carry and free from wire constraints, true wireless stereo (true wireless stereo, TWS) earphones are developed and applied rapidly. A battery of the TWS earphone is mainly a button lithium battery, and a battery cell structure of the battery is mostly assembled in a "winding" manner. A negative electrode plate, a separator, a positive electrode plate, and another separator are sequentially wound by using a winding process, to form a spiral roll core structure. In charging and discharging processes of the battery in the winding structure, a current flows along an electrode plate that is wound into a cylindrical shape, to form an eddy current. According to an electromagnetic induction principle, a change of the current generates a magnetic field.

In the wound battery cell, currents in the positive electrode plate and the negative electrode plate are of same magnitude and opposite directions, and can cancel, to some extent, induced magnetic fields generated by each other. However, in a battery structure design, for safety purposes, a length and a width of the negative electrode plate of the battery are usually greater than those of the positive electrode plate, and magnetic permeability of the positive electrode plate is different from that of the negative electrode plate. Therefore, an eddy current magnetic field is inevitably formed in a working process of the wound battery cell. The eddy current magnetic field and an earphone coil form magnetic field coupling and generate noise. This directly affects product sound quality and user experience.

### SUMMARY

Embodiments of this application provide a battery and an electronic device, to reduce a magnetic field, of a roll core, that is generated due to a difference between positive and negative electrode plates, effectively reduce interference to a load device, and improve use experience.

A first aspect of embodiments of this application provides a battery. A battery cell of the battery includes a housing, a roll core, a positive electrode tab, and a negative electrode tab. The roll core is disposed inside the housing, and is formed by winding a negative electrode plate, separators, and a positive electrode plate. In a circumference direction of the roll core, the positive electrode tab is electrically connected to the positive electrode plate at a first location, and the negative electrode tab is electrically connected to the negative electrode plate at a second location, where a length of the positive electrode plate is greater than a length of the negative electrode plate, a winding end of the positive electrode plate extends beyond a winding end of the negative electrode plate, and the first location is any location at which the positive electrode plate extends beyond the winding end of the negative electrode plate, that is, the positive electrode tab is electrically connected to the positive electrode plate that extends beyond the winding end of the negative electrode plate. A part of the positive electrode plate and that is wound from the second location to the first location is a positive electrode extension section, at least an inner surface of the positive electrode extension section is passivated, and the inner surface herein is a surface of a side that is of the positive electrode plate and that faces the negative electrode plate. In this way, in the solution of this application, structural adjustment is performed on the length of the positive electrode plate, and an eddy current magnetic field generated by a negative electrode is cancelled by a working current generated based on the positive electrode extension section. Therefore, a magnetic field of the roll core can be properly controlled, impact of the eddy current magnetic field is effectively reduced, and technical assurance is provided for improving user experience. Similarly, the "passivation" herein is used to avoid or reduce lithium ion migration flow between the positive electrode extension section of the positive electrode plate and the inner negative electrode plate, and a security risk is avoided by controlling the lithium ion migration flow of the extension section. In addition, in comparison with a previous manner of adding a compensation loop, reducing a connection power, or disposing a magnetic insulating material, a structure implementation of this solution is simplified, and a manufacturing and assembly tolerance requirement is reduced accordingly. Therefore, overall implementation costs are low, and actual user experience is not affected. In addition, under a same capacity and endurance requirement, a battery size can be properly reduced based on the architecture of this solution, and this solution can be widely used in architecture designs of light and thin products.

In an actual application, the foregoing passivation implementations may be implemented only on an inner surface of the positive electrode extension section, or may be implemented on surfaces on two sides of the positive electrode extension section L, to reduce process implementation costs.

For example, the passivation is that a surface of a substrate of the positive electrode extension section is not coated with a positive electrode material. Therefore, when the positive electrode extension section is added, increase of the battery size can be effectively controlled, thereby improving endurance energy.

The passivation means may be an insulation layer coated on the surface of the substrate of the positive electrode extension section, or a barrier material layer coated on the surface of the substrate of the positive electrode extension section. Therefore, passivation may be completed in a direct coating manner, and a process is simple.

For another example, the passivation means may be that density of the positive electrode material of the positive electrode extension section is less than density of a negative electrode material of the negative electrode plate; or the passivation means may be that thickness of the positive electrode material of the positive electrode extension section is less than thickness of a positive electrode material in another region of the positive electrode plate. Further, an outer side of the positive electrode material of the positive electrode extension section may be coated with an insulation layer.

Based on the first aspect, an embodiment of this application further provides a first implementation of the first aspect: an outer surface of the positive electrode extension section is covered with an insulation layer or a separator. In this way, physical insulation between the positive electrode plate and the housing can be ensured.

Based on the first aspect or the first implementation of the first aspect, an embodiment of this application further provides a second implementation of the first aspect: A winding angle formed by the positive electrode extension section of the positive electrode plate ranges from 270° to 300°. In other words, a welding location between the positive electrode tab and the positive electrode plate may be wound by 270° to 300° from a welding location between the negative electrode tab and the negative electrode plate. In this way, a magnetic field of the roll core body can be more stably and reliably cancelled.

Based on the first aspect, or the first implementation of the first aspect, or the second implementation of the first aspect, an embodiment of this application further provides a third implementation of the first aspect: Both the positive electrode tab and the negative electrode tab are axially disposed, the positive electrode tab axially extends out of a first through opening on the housing, to form a positive electrode pin of the battery, and the negative electrode tab axially extends out of a second through opening on the housing, to form a negative electrode pin of the battery. In this way, because the positive electrode tab and the negative electrode tab axially extend out, current directions of the positive electrode tab and the negative electrode tab are both perpendicular to an end surface of the roll core. The current directions of the positive electrode tab and the negative electrode tab are adjusted, for example, an earphone is used as an example for implementation, formed magnetic fields may be approximately parallel to an SPK, and are not coupled to the SPK, and the magnetic fields generated by the positive electrode tab and the negative electrode tab are equal in magnitude but opposite in directions, resulting in mutual cancellation, so that a self-induced eddy current magnetic field of a steel-shell button battery is minimized. In addition, because the positive electrode tab and the negative electrode tab that axially extend out, positive and negative electrode adapter plates that are electrically connected to an external load are removed, so that additional magnetic fields generated by configuring the positive and negative electrode adapter plates can be completely avoided, and possible impact of a current sound can be further avoided.

For example, this implementation is applied to an earphone. An earphone SPK may be placed in a low magnetic field region, so that noise generated due to an eddy current magnetic field of a battery on the earphone side can be effectively eliminated. In addition, in an application scenario that adapts to an earphone, a battery solution provided based on the solution may be applied to left and right earphones, and a problem of eddy current noise of the left ear and the right ear is resolved.

For example, the positive electrode pin and the negative electrode pin are located on a same side of the housing, or the positive electrode pin and the negative electrode pin may be respectively located on two sides of the housing.

Based on the first aspect, or the first implementation of the first aspect, or the second implementation of the first aspect, an embodiment of this application further provides a fourth implementation of the first aspect: The positive electrode tab includes a positive electrode tab connection part and a positive electrode pin part that are connected. The positive electrode tab connection part includes a first part and a second part that are formed through axial folding. The first part of the positive electrode tab connection part is electrically connected to the positive electrode plate. Specifically, the first part of the positive electrode tab connection part may be electrically connected to an outer ring of the positive electrode plate, the second part of the positive electrode tab connection part covers an outer side of the roll core, and the positive electrode pin part is connected to the second part of the positive electrode tab connection part and radially extends out from a first through opening on the housing. The negative electrode tab includes a negative electrode tab connection part and a negative electrode pin part that are connected. The negative electrode tab connection part includes a first part and a second part that are formed through axial folding. The first part of the negative electrode tab connection part is electrically connected to the negative electrode plate. Specifically, the first part of the negative electrode tab connection part may be electrically connected to an outer ring of the negative electrode plate, the second part of the negative electrode tab connection part covers the outer side of the roll core, and the negative electrode pin part is connected to the second part of the negative electrode tab connection part and radially extends out from the second through opening on the housing. In this way, both the positive electrode tab connection part of the positive electrode tab and the negative electrode tab connection part of the negative electrode tab are of a folding structure, formed magnetic fields can be cancelled and are not coupled to the SPK, and magnetic fields generated by the positive electrode pin part and the negative electrode pin part do not affect the SPK. In addition, based on the positive electrode tab and the negative electrode tab that radially extend out, the positive and negative electrode adapter plates that are electrically connected to the external load are removed, so that possible impact of the current sound can be further avoided.

In an actual application, the second part of the positive electrode tab connection part may cover the separator on the outer side of the roll core, or cover an insulation layer on the outer side of the roll core; and correspondingly, the second part of the negative electrode tab connection part may cover the separator on the outer side of the roll core, or cover the insulation layer on the outer side of the roll core.

Based on the first aspect, or the first implementation of the first aspect, or the second implementation of the first aspect, an embodiment of this application further provides a fifth implementation of the first aspect: The battery further includes a positive electrode pole, where a first through opening is provided on a peripheral wall of the housing, and the positive electrode pole is inserted into the first through opening. The positive electrode tab includes a first part and a second part that are formed through axial folding, the first part of the positive electrode tab is electrically connected to the positive electrode plate, the second part of the positive electrode tab covers an outer side of the roll core, and the positive electrode pole is electrically connected to the second part of the positive electrode tab. The negative electrode tab includes a first part and a second part that are formed through axial folding. The first part of the negative electrode tab is electrically connected to the negative electrode plate, the second part of the negative electrode tab covers the outer side of the roll core, and the second part is electrically connected to the housing. In this way, in a case in which no compensation plate or lead is added to the outside of the battery, a low magnetic field region with a large area may be formed by significantly reducing the magnetic field of the roll core and adjusting directions of magnetic fields of positive and negative electrode tabs. In addition, in this implementation solution, a fully sealed battery structure is used, so that sealing reliability of a battery is further improved on the basis of effectively resolving eddy current noise. This can enhance long-term storage performance of the battery.

In an actual application, the second part of the positive electrode tab may cover the separator on the outer side of the roll core, or cover an insulation layer on the outer side of the roll core; and correspondingly, the second part of the negative electrode tab may cover the separator on the outer side of the roll core, or cover the insulation layer on the outer side of the roll core.

Based on the third implementation of the first aspect, or the fourth implementation of the first aspect, or the fifth implementation of the first aspect, an embodiment of this application further provides a sixth implementation of the first aspect: Insulation paper is disposed between the positive electrode tab and an inner wall of the housing, and a positive electrode insulation part is disposed between the positive electrode tab and the first through opening of the housing. This can effectively prevent a short circuit.

Based on the first aspect, or the first implementation of the first aspect, or the second implementation of the first aspect, an embodiment of this application further provides a seventh implementation of the first aspect: The battery further includes a positive electrode pole and a positive electrode connection plate, where the positive electrode pole axially extends out of the housing. The positive electrode plate is electrically connected to the positive electrode pole through the positive electrode tab, and the negative electrode plate is electrically connected to the housing through the negative electrode tab. The positive electrode connection plate is electrically connected to an extended end of the positive electrode pole, and extends to a side of the battery cell to form a positive electrode pin of the battery. A conductor section is between the positive electrode pin of the positive electrode connection plate and a connection location between the positive electrode connection plate and the positive electrode pole. A groove formed by an arc section is provided on a side edge of the conductor section, a first side edge and a second side edge that are disposed at an included angle are provided on two sides of the groove, and both the first side edge and the second side edge are straight side edges. In this way, based on the groove disposed on the side edge of the positive electrode connection plate, currents from the positive electrode pole side to the positive electrode pin side flow to the groove in a centralized manner, and distribution of the currents on the conductor section are accurately controlled by using a skin effect principle. In other words, current paths in the compensation loop are controlled based on the disposition of the groove, instead of being evenly distributed in other regions of the conductor section.

Based on the seventh implementation of the first aspect, an embodiment of this application further provides an eighth implementation of the first aspect: The arc section used to form the groove includes an inner concave arc section and an outer convex arc section that are sequentially connected between the first side edge and the second side edge, and an included angle α between the second side edge and a reverse extension line of the first side edge on the side of the conductor section ranges from 10° to 30°. In this way, the formed groove also has good compensation effect.

In another actual application, the arc section is an arc connected between the first side edge and the second side edge, or the arc section includes a plurality of arcs connected between the first side edge and the second side edge; and an included angle α between the second side edge and a reverse extension line of the first side edge on the side of the conductor section ranges from 10° to 30°. The formed groove also has good compensation effect.

In an actual application, an insulation layer is disposed between the positive electrode connection plate and an end surface of the housing, and an insulation layer is disposed between the positive electrode pole and the housing. This can effectively prevent a short circuit.

A second aspect of embodiments of this application provides a battery. The battery includes a battery cell, the battery cell includes a housing, a roll core, a positive electrode tab, a negative electrode tab, and a positive electrode pole. The roll core is disposed inside the housing, and is formed by winding a negative electrode plate, separators, and a positive electrode plate. The positive electrode pole of the roll core axially extends out of the housing, the positive electrode plate is electrically connected to the positive electrode pole through the positive electrode tab, and the negative electrode plate is electrically connected to the housing through the negative electrode tab. A positive electrode connection plate is electrically connected to an extended end of the positive electrode pole, and extends to a side of the battery cell to form a positive electrode pin of the battery. A conductor section is between the positive electrode pin of the positive electrode connection plate and a connection location between the positive electrode connection plate and the positive electrode pole. A groove formed by an arc section is provided on a side edge of the conductor section, a first side edge and a second side edge that are disposed at an included angle are provided on two sides of the groove, and both the first side edge and the second side edge are straight side edges. In this way, based on the groove disposed on the side edge of the positive electrode connection plate, currents from the positive electrode pole side to the positive electrode pin side flow to the groove in a centralized manner, and distribution of the currents on the conductor section are accurately controlled by using a skin effect principle. In other words, current paths in the compensation loop are controlled based on the disposition of the groove, instead of being evenly distributed in other regions of the conductor section.

For example, the arc section includes an inner concave arc section and an outer convex arc section that are sequentially connected between the first side edge and the second side edge, and an included angle α between the second side edge and a reverse extension line of the first side edge on the side of the conductor section ranges from 10° to 30°. In this way, the formed groove also has good compensation effect.

In another actual application, the arc section is an arc connected between the first side edge and the second side edge, or the arc section includes a plurality of arcs connected between the first side edge and the second side edge; and an included angle α between the second side edge and a reverse extension line of the first side edge on the side of the conductor section ranges from 10° to 30°. The formed groove also has good compensation effect.

A third aspect of embodiments of this application provides an electronic device, including a battery and a load device electrically connected to the battery, where the battery is the foregoing battery.

In some actual applications, the electronic device may be of different device types having a load device. For example, the electronic device may be an earphone, and the load device is a speaker of the earphone.

### BRIEF DESCRIPTION OF DRAWINGS

FIG. 1 is a diagram of an overall structure of a battery according to an embodiment of this application;
FIG. 2 is an exploded view of assembly of the battery shown in FIG. 1;
FIG. 3 is a diagram of a use state of the battery shown in FIG. 1;
FIG. 4 is a diagram of a winding structure of a roll core according to an embodiment of this application;
FIG. 5 is a diagram of a comparison relationship between a positive electrode plate and a negative electrode plate shown in FIG. 4 that are expanded;
FIG. 6A to FIG. 6D are diagrams of structures of different passivation;
FIG. 7 is a simulation diagram of magnetic field strength formed based on the battery shown in FIG. 1;
FIG. 8 is a diagram of an overall structure of another battery according to an embodiment of this application;
FIG. 9 is an exploded view of assembly of the battery shown in FIG. 8;
FIG. 10 is a diagram of a use state of the battery shown in FIG. 8;
FIG. 11 is a simulation diagram of magnetic field strength formed based on the battery shown in FIG. 8;
FIG. 12 is a diagram of an overall structure of another battery according to an embodiment of this application;
FIG. 13 is an exploded view of assembly of the battery shown in FIG. 12;
FIG. 14 is a sectional view of an assembly relationship between a positive electrode tab, a negative electrode tab, and a housing of a battery cell shown in FIG. 13;
FIG. 15 is a diagram of a use state of the battery shown in FIG. 12;
FIG. 16 is a simulation diagram of magnetic field strength formed based on the battery shown in FIG. 12;
FIG. 17 is a diagram of an overall structure of another battery according to an embodiment of this application;
FIG. 18 is an exploded view of assembly of the battery shown in FIG. 17;
FIG. 19 is a sectional view of an assembly relationship between a positive electrode tab, a negative electrode tab, and a housing of a battery cell shown in FIG. 18;
FIG. 20 is a diagram of a use state of the battery shown in FIG. 17;
FIG. 21 is a simulation diagram of magnetic field strength formed based on the battery shown in FIG. 17;
FIG. 22 is a diagram of an overall structure of another battery according to an embodiment of this application;
FIG. 23 is an exploded view of assembly of the battery shown in FIG. 22;
FIG. 24 is a top view of the battery shown in FIG. 22; and
FIG. 25 is a simulation diagram of magnetic field strength formed based on the battery shown in FIG. 22.

### DESCRIPTION OF EMBODIMENTS

Embodiments of this application provide a roll core structure-based battery. A roll core structure is adjusted, so that a magnetic field, of a roll core, that is generated due to a difference between positive and negative electrode plates can be effectively reduced, and user experience can be significantly improved.

In the conventional technology, an eddy current magnetic field is inevitably formed in a working process of a wound battery cell. In a corresponding application scenario, the eddy current magnetic field affects product use experience to different degrees. An earphone is used as an example. The eddy current magnetic field and an earphone coil form magnetic field coupling, driving a speaker (speaker, SPK) side of the earphone to form a current sound. This affects sound quality of the earphone, and actual user experience is poor.

In view of this, embodiments of this application provide a battery. The battery includes a battery cell. The battery cell includes a housing, a roll core, a positive electrode tab, and a negative electrode tab. The roll core disposed inside the housing is formed by winding a negative electrode plate, separators, and a positive electrode plate. Specifically, a spiral roll core structure is formed by sequentially winding the negative electrode plate, the separator, the positive electrode plate, and the separator by using a winding process. In a circumference direction of the roll core, the positive electrode tab is electrically connected to the positive electrode plate at a first location, and the negative electrode tab is electrically connected to the negative electrode plate at a second location. The circumference direction herein refers to a winding direction of the roll core structure. In this implementation solution, a length of the positive electrode plate is greater than a length of the negative electrode plate, a winding end of the positive electrode plate extends beyond a winding end of the negative electrode plate, and the positive electrode tab is electrically connected to the positive electrode plate that extends beyond the winding end of the negative electrode plate. In other words, the first location is any location at which the positive electrode plate extends beyond the winding end of the negative electrode plate. A part of the positive electrode plate between the second location and the first location is a positive electrode extension section. To prevent a safety problem, an inner surface of the positive electrode extension section may be further passivated. The "passivation" herein is used to avoid or reduce lithium ion migration flow between the positive electrode extension section of the positive electrode plate and the inner negative electrode plate, and a security risk is avoided by controlling the lithium ion migration flow of the extension section.

In this way, structural adjustment is performed on the length of the positive electrode plate, so that a magnetic field of the roll core can be properly controlled, impact of an eddy current magnetic field is effectively reduced, and technical assurance is provided for improving user experience.

In addition, in comparison with a manner of adding a compensation loop, reducing a connection power, or disposing a magnetic insulating material, a structure implementation of this solution is simplified, and a manufacturing and assembly tolerance requirement is reduced accordingly. Therefore, overall implementation costs are low, and actual user experience is not affected. In addition, under a same capacity and endurance requirement, a battery size can be properly reduced based on the architecture of this solution, and this solution can be widely used in architecture designs of light and thin products.

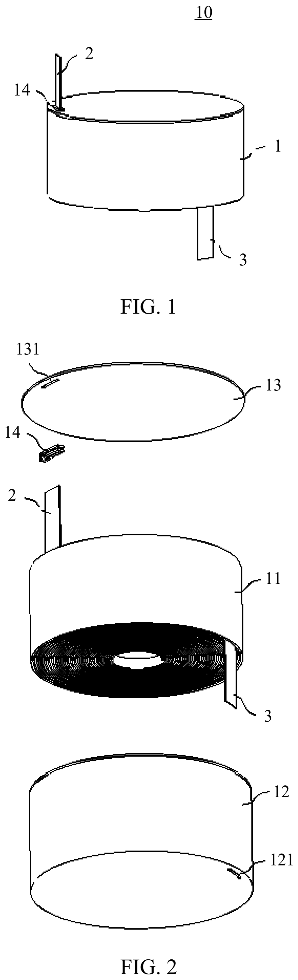

To better understand the technical solutions and technical effect of this application, without loss of generality, the following describes specific embodiments in detail with reference to the accompanying drawings by using a wireless earphone as an application scenario of a battery 10. Refer to FIG. 1 and FIG. 2. FIG. 1 is a diagram of an overall structure of a battery according to an embodiment of this application, and FIG. 2 is an exploded view of assembly of the battery shown in FIG. 1.

As shown in FIG. 1, a positive electrode tab 2 and a negative electrode tab 3 of the battery 10 axially extend out of a battery cell 1, and the positive electrode tab 2 and the negative electrode tab 3 are disposed away from each other at two ends of the battery cell 1.

As shown in FIG. 2, a roll core 11 of the battery cell 1 is disposed inside a housing enclosed by a bottom housing 12 and a top cover 13. The bottom housing 12 includes an axial end opening, and the top cover 13 is sealingly connected to the axial end opening of the bottom housing 12 to accommodate the roll core 11. A second through opening 121 is provided on a bottom of the bottom housing 12, and a first through opening 131 is provided on the top cover 13, for the positive electrode tab 2 and the negative electrode tab 3 to respectively extend out.

Herein, materials of the bottom housing 12 and the top cover 13 may be stainless steel, aluminum alloy, or a flexible aluminum-plastic film, and the flexible aluminum-plastic film may be formed by laminating a PP layer/an aluminum layer/an outer packaging nylon layer or matte layer. Specifically, the bottom housing 12 and the top cover 13 may be connected by using a welding process, for example, but not limited to laser welding or ultrasonic welding. In addition, in a specific implementation, the positive electrode tab 2 may be an aluminum sheet or a nickel sheet, and the negative electrode tab 3 may be a nickel sheet, a stainless steel sheet, or a copper sheet. This is not limited in embodiments of this application.

As shown in the figure, the positive electrode tab 2 extends out of the battery cell 1 from the first through opening 131 of the top cover 13, and a positive electrode pin of the battery is formed by using an extended end of the positive electrode tab 2. The negative electrode tab 3 extends out of the battery cell 1 from the second through opening 121 of the bottom housing 12. The bottom housing 12, the top cover 13, and the negative electrode tab 3 of the roll core 11 are connected together to form a negative electrode of the battery cell, and a negative electrode pin of the battery is formed by using an extended end of the negative electrode tab 3.

To establish a reliable insulation relationship, a positive electrode insulation part 14 is disposed between the positive electrode tab 2 and the first through opening 131 of the top cover 13, to prevent a short circuit. In a specific implementation, the positive electrode insulation part 14 may be made of different materials, for example, but not limited to PP (polypropylene, polypropylene), PPS (Polyphenylene sulfide, polyphenyl sulfide), PFA (Polyfluoroalkoxy, Polyfluoroalkoxy), or PEEK (poly(ether-ether-ketone), poly(ether-ether-ketone)).

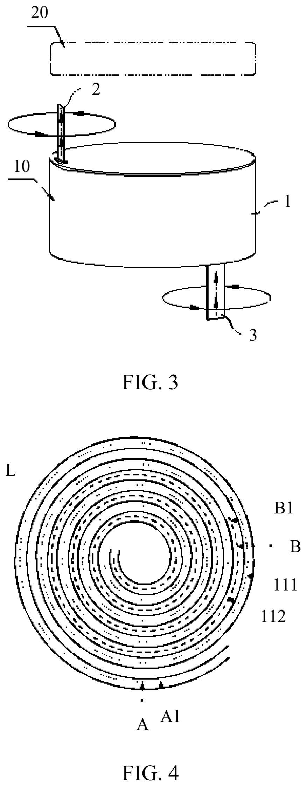

In this implementation solution, both the positive electrode tab 2 and the negative electrode tab 3 are perpendicular to an end surface of the roll core, and are electrically connected to an external load in a manner of extending out in the axial direction of the roll core, and there is no need to additionally configure a positive electrode adapter plate and a negative electrode adapter plate. FIG. 3 is a diagram of a use state of the battery shown in FIG. 1.

As shown in FIG. 3, an SPK 20 and the battery 10 are disposed opposite to each other in the axial direction of the roll core. Because the positive electrode tab and the negative electrode tab axially extend out, current directions of the positive electrode tab 2 and the negative electrode tab 3 are both perpendicular to the end surface of the roll core. The current directions of the positive and negative electrode tabs are adjusted, so that formed magnetic fields are approximately parallel to the SPK 20, and are not coupled to the SPK 20. In addition, the magnetic fields generated by the positive and negative electrode tabs are equal in magnitude but opposite in direction, resulting in mutual cancellation. In this way, a self-induced eddy current magnetic field of a steel-shell button battery is minimized. In addition, because the positive electrode tab and the negative electrode tab axially extend out, positive and negative electrode adapter plates that are electrically connected to the external load are removed, so that additional magnetic fields generated by configuring the positive and negative electrode adapter plates can be completely avoided.

In another specific implementation, the positive electrode tab 2 and the negative electrode tab 3 may further reversely extend out of the battery cell 1. In other words, the positive electrode tab 2 extends out of the battery cell from the second through opening on the bottom cover side, and the negative electrode tab extends out of the battery cell from the first through opening on the top cover side (not shown in the figure). This is not limited in embodiments of this application.

FIG. 4 is a diagram of a winding structure of the roll core 11 according to an embodiment of this application. For ease of understanding, in FIG. 4, a long-dotted line indicates the negative electrode plate 112, a short-dotted line indicates the positive electrode plate 111, and a solid line indicates the separator between the positive electrode plate and the negative electrode plate.

As shown in FIG. 4, the positive electrode tab 2 is electrically connected to an outer ring of the positive electrode plate 111, and the negative electrode tab 3 is electrically connected to an outer ring of the negative electrode plate 112. The positive electrode tab 2 and the negative electrode tab 3 are respectively configured to collect or release a current in a battery charging process and a battery discharging process. In this implementation solution, a first location A of the positive electrode plate 111 is used to weld the positive electrode tab (not shown in the figure), and a second location B of the negative electrode plate 112 is used to weld the negative electrode tab (not shown in the figure). The first location A and the second location B are respectively located at outermost layers of the electrode plates on which winding molding is performed.

A length of the positive electrode plate 111 is greater than a length of the negative electrode plate 112, and a winding end A1 of the positive electrode plate 111 extends beyond a winding end B1 of the negative electrode plate 112. Herein, a welding location (the first location A) of the positive electrode tab is located at a part that is of the positive electrode plate 111 and that extends beyond the negative electrode plate 112. For ease of description, a part of the positive electrode plate 111 between the second location B and the first location A is defined as a positive electrode extension section L. In a power supply state of the battery, based on the positive electrode extension section L, a magnetic field generated on a negative electrode side of a battery cell in a winding structure can be cancelled, and a magnetic field, of the roll core, that is generated due to a difference between the positive and negative electrode plates can be reduced, thereby effectively reducing impact of an eddy current magnetic field on the SPK.

As shown in FIG. 4, an outer surface of the positive electrode extension section L is covered with the separator, to form good physical insulation between the positive electrode extension section L and the housing. In another possible implementation solution, the outer surface of the positive electrode extension section L may be further covered with an insulation layer (not shown in the figure), and reliable physical insulation may also be formed.

Further, the welding location (the first location A) between the positive electrode tab 2 and the positive electrode plate 111 may be wound by 270° to 300° from the welding location (the second location B) between the negative electrode tab 3 and the negative electrode plate 112. In other words, a winding angle formed by the positive electrode extension section L of the positive electrode plate 111 in a circumferential direction may range from 270° to 300°. For example, the winding angle formed by the positive electrode extension section L shown in FIG. 4 is approximately 270°. In another specific implementation, the winding angle may be determined based on an actual product design. This is not limited herein.

In a specific implementation, an aluminum sheet may be used as a substrate of the positive electrode plate 111, and then a surface of the aluminum sheet is coated with a positive electrode material, to form a cathode electrode plate. The positive electrode material may include but is not limited to one or more of a lithium cobalt oxide material, a nickel cobalt manganese ternary material, and a lithium manganese oxide material. A steel sheet may be used as a substrate of the negative electrode plate 112, and then a surface of the steel sheet is coated with a negative electrode material to form an anode electrode plate. The negative electrode material may be, for example, but not limited to, graphite or silicon.

During charging, a current enters the battery from an external power supply through a positive electrode of the battery. In a charging process, lithium ions migrate from the positive electrode material on the cathode side to the negative electrode material on the anode side, and electrons also flow from the negative electrode to the positive electrode to store electric energy. When the battery is used, the current flows out from the positive electrode of the battery to supply power to an external circuit. In a discharging process, the lithium ions flow from the anode side to the cathode side, and the electrons flow back from the external circuit to the negative electrode to release the electric energy.

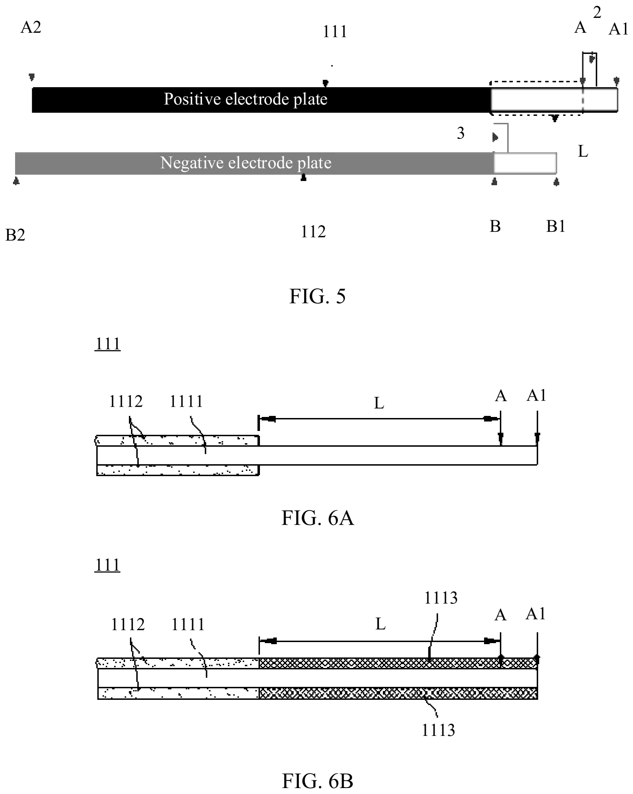

FIG. 5 is a diagram of a comparison relationship between the positive electrode plate 111 and the negative electrode plate 112 shown in FIG. 4 that are expanded. For the positive electrode plate 111 and the negative electrode plate 112 that are shown in an expanded manner, as shown in the figure, both a winding start end A2 of the positive electrode plate 111 and a winding start end B2 of the negative electrode plate 112 are located on a left side of the figure, and correspondingly, both the winding end A1 of the positive electrode plate 111 and the winding end B1 of the negative electrode plate 112 are located on a right side of the figure.

In a specific implementation, the passivation may be implemented in different manners. FIG. 6A to FIG. 6D are diagrams of structures of the positive electrode extension section after different passivation. For ease of description, a surface representing a corresponding composition structure is not partially enlarged according to a general proportion, and the diagram is merely an example, and shall not limit the protection scope of this application herein.

In an implementation solution, for the positive electrode extension section L of the positive electrode plate 111, passivation may be implemented by not coating the positive electrode extension section L with the positive electrode material. As shown in FIG. 6A, a surface of a substrate 1111 of the positive electrode plate 111 is coated with a positive electrode material 1112, to implement lithium ion migration in charging and discharging processes. The positive electrode extension section L is not coated with the positive electrode material. For example, an aluminum sheet is used as a substrate of the positive electrode plate 111, and the substrate 1111 of the positive electrode extension section L is in an exposed state.

In addition, to improve processing processability, the substrate 1111 between the welding location (the first location A) between the positive electrode tab 2 and the positive electrode plate 111 and the winding end A1 may also not be coated with the positive electrode material. In other words, both the positive electrode extension section L and the positive electrode plate between the first location A and the winding end A1 are passivated. Overall, this has good processing processability.

In another implementation solution, for the positive electrode extension section L of the positive electrode plate 111, passivation may be implemented by coating the positive electrode extension section L with an insulation layer, for example, but is not limited to coating the positive electrode extension section L with an insulation adhesive. As shown in FIG. 6B, the positive electrode extension section L and the positive electrode plate between the first location A and the winding end A1 are not coated with positive electrode materials, and surfaces of two sides of the substrate are coated with insulation layers 1113.

In still another implementation solution, for the positive electrode extension section L of the positive electrode plate 111, a blocking material may be coated to form a blocking material layer, for example, but not limited to a ceramic coating layer, a resin coating layer, or a rubber coating layer. Specifically, the positive electrode extension section L and the positive electrode plate between the first location A and the winding end A1 are not coated with positive electrode materials, and blocking materials are coated on the two surfaces of the substrate to form blocking material layers (not shown in the figure, and refer to a configuration relationship of an insulation layer shown in FIG. 6B).

The foregoing two passivation manners are all coating manners in which conventional positive electrode materials are replaced. In another possible implementation solution, passivation may be further implemented on an inner surface of the positive electrode extension section L by changing the positive electrode material.

In an implementation solution, for the positive electrode extension section L of the positive electrode plate 111, a positive electrode material whose density is lower than density of a negative electrode material may be used (not shown in the figure, and refer to a configuration relationship of an insulation layer shown in FIG. 6B).

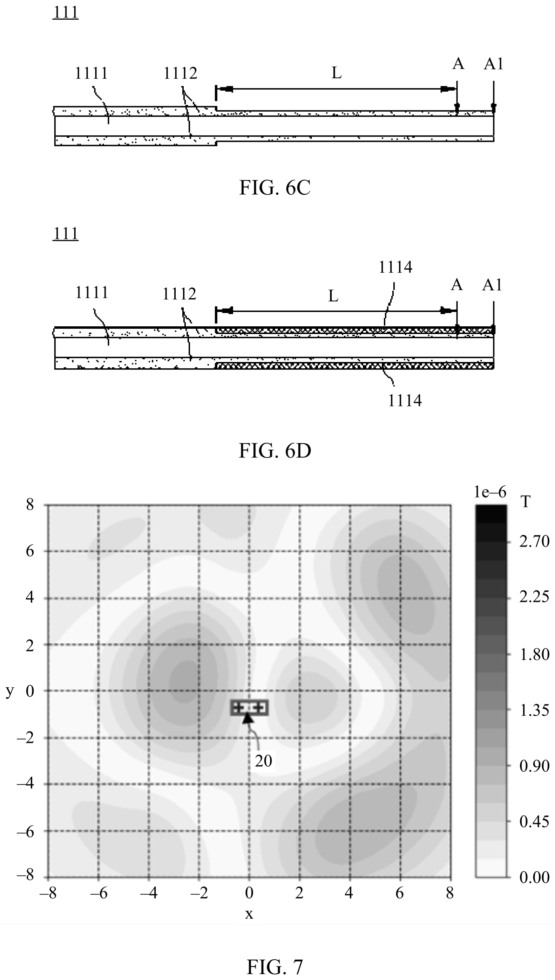

In another implementation solution, for the positive electrode extension section L of the positive electrode plate 111, thickness of the positive electrode material layer may be reduced, to implement passivation. As shown in FIG. 6C, in comparison with thickness of a positive electrode material 1112 in another region of the positive electrode plate 111, the positive electrode extension section L and the positive electrode plate between the first location A and the winding end A1 may be coated with same positive electrode materials 1112, and thickness of a positive electrode material layer is reduced.

In still another implementation solution, for a manner of implementing passivation by reducing the thickness of the positive electrode material layer, as shown in FIG. 6D, an outer side of the thinned positive electrode material 1112 may be further coated with an insulation layer 1114, for example, but not limited to being coated with an insulation adhesive, to further enhance passivation effect.

It should be noted that, the foregoing passivation implementations may be implemented only on the inner surface of the positive electrode extension section L, or may be implemented on the surfaces on the two sides of the positive electrode extension section L as shown in the figure, to reduce process implementation costs.

In addition, based on the positive electrode tab and the negative electrode tab that axially extend out, there is no need to reserve space for the positive electrode pole and electrode tab welding space for the positive electrode tab and the negative electrode tab in a battery height direction inside the battery. The saved space may be used to deploy the roll core body, thereby effectively improving a battery capacity. In addition, in the solution of this application, related structures such as the positive and negative external adapter plates and the positive electrode pole are removed, so that a weight of the battery can be effectively reduced.

For the battery described in FIG. 1, capacity and weight trial production comparison are separately performed by using an existing battery in which a length of a negative electrode plate is greater than a length of a positive electrode plate and electrical connection to an external load is achieved through positive and negative adapter plates as a comparative example.

Table 1 shows the battery capacity comparison.

**Table 1**

| | Diameter/mm | Height/mm | Capacity/(mAh) |
|---|---|---|---|
| Comparative example 1 | A | B | 55.5 |
| Embodiment 1 | A | B | 59.5 |
| Embodiment 2 | A | B | 59.5 |

With reference to the data in the foregoing table, in comparison with the battery described in the comparative example 1, on a basis of a same diameter and a same height size, capacities of the batteries described in two embodiments of the solutions of this application are respectively increased by 7.2%.

**Table 2**

| | Diameter/mm | Height/mm | Weight/(g) |
|---|---|---|---|
| Comparative example 1 | A | B | 1.45 |
| Embodiment 1 | A | B | 1.339 |
| Embodiment 2 | A | B | 1.336 |

With reference to the data in the foregoing table, in comparison with the battery described in the comparative example 1, on a basis of a same diameter and a same height size, a weight of the battery described in Embodiment 1 of the solutions of this application is reduced by 7.6%, and a weight of the battery described in Embodiment 2 of this application is reduced by 7.86%.

In general, for the batteries of the same size, the battery capacity can be significantly increased based on the solution architecture of this application, and a battery endurance capability of a product can be significantly improved. In addition, the weight of the battery can be properly reduced, meeting a design requirement of a trend of lightness and thinness of the product.

In this implementation solution, based on the winding battery cell structure that can reduce the magnetic field of the roll core and a structure configuration of the positive and negative electrode tabs that axially extend out, current sound interference caused by the eddy current magnetic field of the battery can be significantly eliminated.

FIG. 7 is a simulation diagram of magnetic field strength formed based on the battery shown in FIG. 1. As shown in FIG. 7, according to this embodiment of this application, a low magnetic field region with a large area may be constructed, and an earphone SPK 20 may be placed in the low magnetic field region, to effectively eliminate noise generated due to the eddy current magnetic field of the battery on an earphone side. In addition, in an application scenario that adapts to an earphone, a battery solution provided based on this solution may be applied to a left earphone and a right earphone. As shown in the figure, two "+" signs in a block are left and right earphone SPKs, respectively. Magnetic field strength at a location of the left SPK is 0.5*10⁻⁶ T to 0.7*10⁻⁶ T, and magnetic field strength at a location of the right SPK is 0.1*10⁻⁶ T to 0.2*10⁻⁶ T. This can simultaneously resolve a problem of eddy current noise in the left and right ears, and manufacturing costs and management costs can be properly controlled without increasing manufacturing and assembly difficulty.

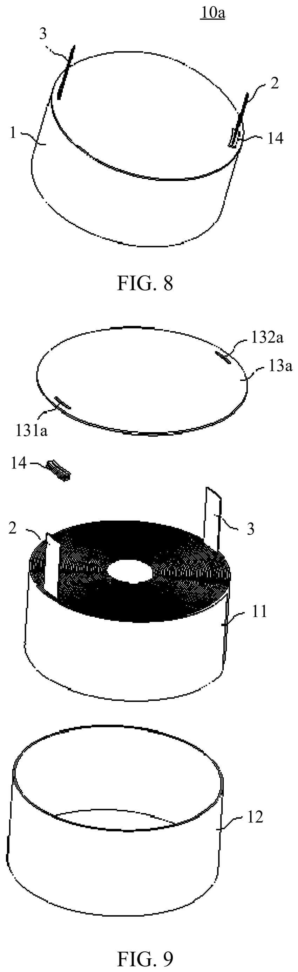

In the battery solution described in FIG. 1, the positive and negative electrode tabs that axially extend out of the battery cell extend away from each other. In another implementation, the positive electrode tab and the negative electrode tab may alternatively extend out of the battery cell in a same direction. Refer to FIG. 8 and FIG. 9. FIG. 8 is a diagram of an overall structure of another battery according to an embodiment of this application, and FIG. 9 is an exploded view of assembly of the battery shown in FIG. 8. To clearly show differences and relationships between this implementation and the embodiment in FIG. 1, same functional composition or a same functional structure is illustrated by using a same label in the figures.

As shown in FIG. 8, in this implementation solution, a positive electrode tab 2 and a negative electrode tab 3 of the battery 10a axially extend out of a battery cell 1, and the positive electrode tab 2 and the negative electrode tab 3 are disposed at a same end of the battery cell 1. With reference to FIG. 9, a roll core 11 of a battery cell 1 is disposed inside a housing enclosed by a bottom housing 12 and a top cover 13a. A first through opening 131a and a second through opening 132a are provided on the top cover 13a, respectively for the positive electrode tab 2 and the negative electrode tab 3 to extend out. In addition, a positive electrode insulation part 14 is disposed between the positive electrode tab 2 and the first through opening 131a of the top cover 13a, to prevent a short circuit.

In this implementation solution, both the positive electrode tab 2 and the negative electrode tab 3 are electrically connected to the outside in a manner of extending out in the axial direction of the roll core, and there is no need to additionally configure a positive electrode adapter plate and a negative electrode adapter plate. Other compositions and connection relationships are the same as those in the embodiment described in FIG. 1. Details are not described herein again.

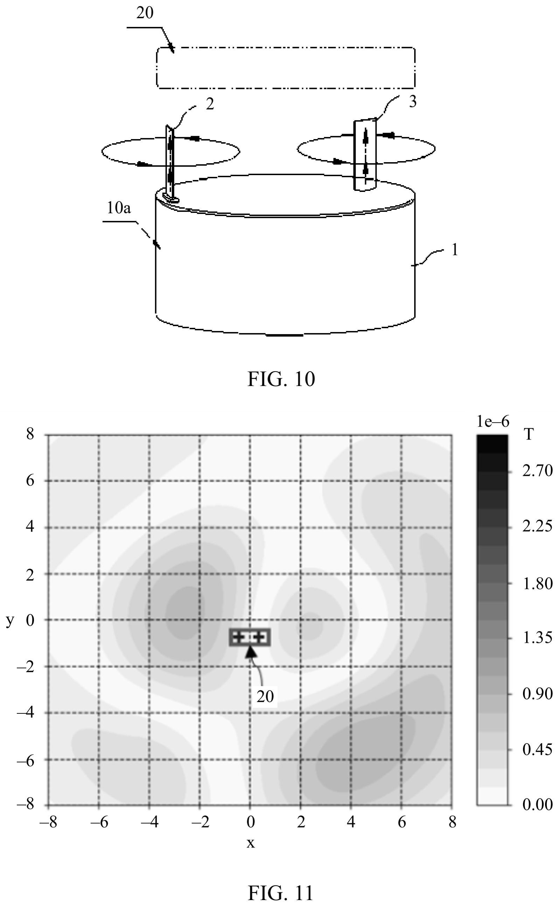

FIG. 10 is a diagram of a use state of the battery shown in FIG. 8.

As shown in FIG. 10, an SPK 20 and the battery 10a are disposed opposite to each other in the axial direction of the roll core. Similarly, current directions of the positive electrode tab 2 and the negative electrode tab 3 are both perpendicular to an end surface of the roll core, formed magnetic fields are approximately parallel to the SPK 20, and are not coupled to the SPK 20, and the magnetic fields generated by the positive electrode tab 2 and the negative electrode tab 3 are equal in magnitude but opposite in directions, resulting in mutual cancellation. In addition, based on the positive electrode tab and the negative electrode tab that axially extend out, positive and negative electrode adapter plates that are electrically connected to an external load are removed.

Similarly, in this implementation solution, based on a winding battery cell structure that can reduce a magnetic field of the roll core and a structure configuration of the positive and negative electrode tabs that axially extend out, current sound interference caused by an eddy current magnetic field of the battery can be significantly eliminated. FIG. 11 is a simulation diagram of magnetic field strength formed based on the battery shown in FIG. 8. Herein, in comparison with the foregoing implementation solution, based on a difference between electrode tab leading out manners, magnetic field distribution in peripheral edge regions in the magnetic field strength simulation diagrams of the two solutions is slightly different.

As shown in FIG. 11, according to this embodiment of this application, a low magnetic field region with a large area may be constructed, and an earphone SPK may be placed in a low magnetic field region, so that noise generated due to the eddy current magnetic field of the battery on the earphone side can be effectively eliminated. In addition, in an application scenario that adapts to an earphone, a battery solution provided based on this solution may be applied to a left earphone and a right earphone. As shown in the figure, two "+" signs in a block are left and right earphone SPKs, respectively. Magnetic field strength at a location of the left SPK is 0.45*10⁻⁶ T to 0.6*10⁻⁶ T, and magnetic field strength at a location of the right SPK is 0.1*10⁻⁶ T to 0.2*10⁻⁶ T. This can simultaneously resolve a problem of eddy current noise in the left and right ears.

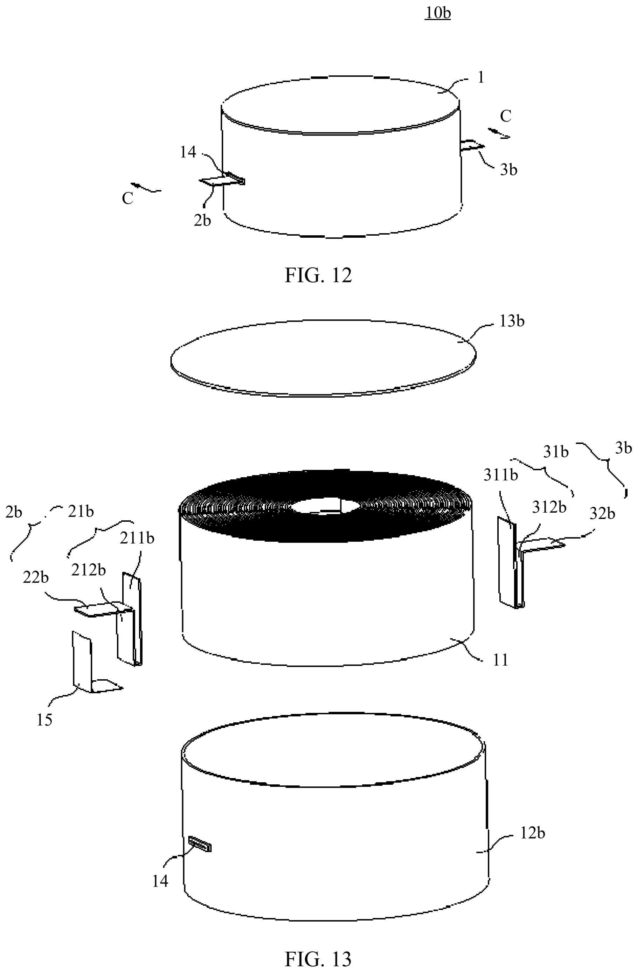

In the battery solutions described in FIG. 1 and FIG. 8, both the positive and negative electrode tabs axially extend out of the battery cell. In another implementation, the positive electrode tab and the negative electrode tab may alternatively radially extend out of the battery cell. Refer to FIG. 12 and FIG. 13. FIG. 12 is a diagram of an overall structure of another battery according to an embodiment of this application, and FIG. 13 is an exploded view of assembly of the battery shown in FIG. 12. To clearly show differences and relationships between this implementation and the embodiment in FIG. 1, same functional composition or a same functional structure is illustrated by using a same label in the figures.

As shown in FIG. 12, in this implementation solution, a positive electrode tab 2b and a negative electrode tab 3b of a battery 10b radially extend out of a battery cell 1. With reference to FIG. 13, a roll core 11 of the battery cell 1 is disposed inside a housing enclosed by a bottom housing 12b and a top cover 13b, and two through openings are provided on a peripheral wall of the bottom housing 12b, respectively for the positive electrode tab 2b and the negative electrode tab 3b to extend out.

In this implementation solution, the positive electrode tab 2b includes a positive electrode tab connection part 21b and a positive electrode pin part 22b that are connected. The positive electrode tab connection part 21b includes a first part 211b and a second part 212b that are formed through axial folding. The first part 211b of the positive electrode tab connection part 21b is electrically connected to an outer ring of a positive electrode plate, and the second part 212b of the positive electrode tab connection part 21b is bent and then covers an outer side of the roll core 11. The positive electrode pin part 22b is connected to the second part 212b of the positive electrode tab connection part 21b, and radially extends out from the peripheral wall of the bottom housing 12b. For example, but not limited to, the second part 212b may cover a separator on the outer side of the roll core 11, or the second part 212b may cover an insulation layer on the outer side of the roll core 11. This is not limited in this embodiment of this application.

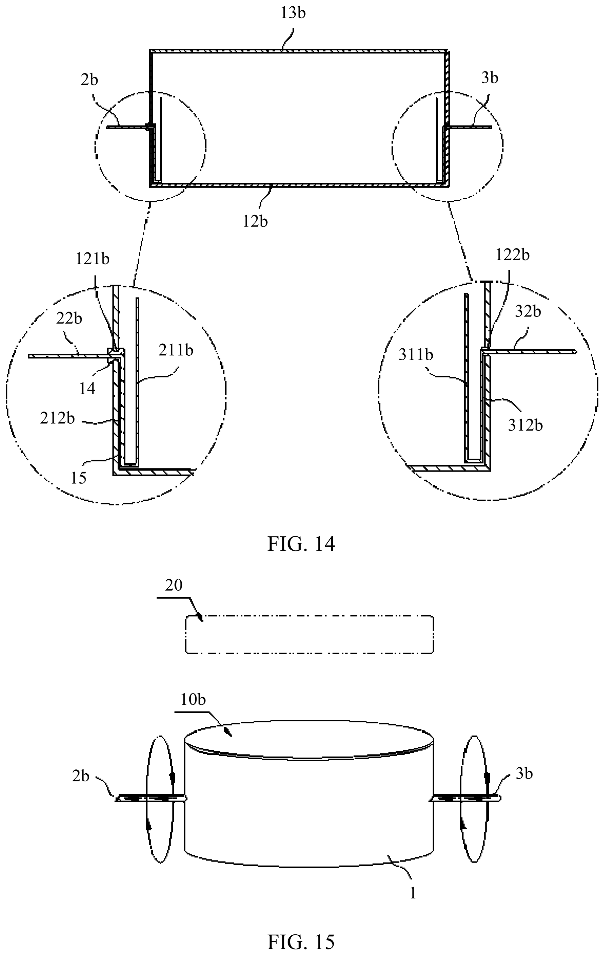

Refer to FIG. 13 and FIG. 14. FIG. 14 is a sectional view of an assembly relationship between the positive electrode tab, the negative electrode tab, and the housing of the battery cell shown in FIG. 12 and FIG. 13. The figure is formed at a sectional location shown as C-C in FIG. 12.

A positive electrode insulation part 14 is disposed between the positive electrode tab 2b and a first through opening 121b on the peripheral wall of the bottom housing 12b, and insulation paper 15 is disposed between the positive electrode tab connection part 21b and the bottom housing 12b, to prevent a short circuit. In a specific implementation, the insulation paper 15 is in an "L" shape, and the second part 212b of the positive electrode tab connection part 21b and a folded connection part between the first part 211b and the second part 212b of the positive electrode tab connection part 21b are isolated from the bottom housing 12b. It may be understood that the insulation paper 15 is not limited to the shape shown in the figure, provided that the foregoing physical insulation can be implemented between the inner wall of the housing of the battery cell and the positive electrode tab.

The negative electrode tab 3b includes a negative electrode tab connection part 31b and a negative electrode pin part 32b that are connected. The negative electrode tab connection part 31b includes a first part 311b and a second part 312b that are formed through axial folding. The first part 311b of the negative electrode tab connection part 31b is electrically connected to an outer ring of a negative electrode plate, and the second part 312b of the negative electrode tab connection part 31b is bent and then covers the outer side of the roll core 11. The negative electrode pin part 32b is connected to the second part 312b of the negative electrode tab connection part 31b, and radially extends out from the second through opening 122b of the peripheral wall of the bottom housing 12b. For example, but not limited to, the second part 312b may cover the separator on the outer side of the roll core 11, or the second part 312b may cover the insulation layer on the outer side of the roll core 11. This is not limited in this embodiment of this application.

In this implementation solution, both the positive electrode tab 2b and the negative electrode tab 3b are electrically connected to the outside in a manner of extending out in a radial direction of the roll core, and there is no need to additionally configure a positive electrode adapter plate and a negative electrode adapter plate. Other compositions and connection relationships are the same as those in the embodiment described in FIG. 1. Details are not described herein again.

FIG. 15 is a diagram of a use state of the battery shown in FIG. 12.

As shown in FIG. 15, an SPK 20 and the battery 10b are disposed opposite to each other in an axial direction of the roll core. Similarly, both the positive electrode tab connection part of the positive electrode tab 2b and the negative electrode tab connection part of the negative electrode tab 3b are of a folding structure, formed magnetic fields can be cancelled and are not coupled to the SPK 20, and magnetic fields generated by the positive electrode pin part 22b and the negative electrode pin part 32b do not affect the SPK 20. In addition, based on the positive electrode tab and the negative electrode tab that radially extend out, positive and negative electrode adapter plates that are electrically connected to an external load are removed.

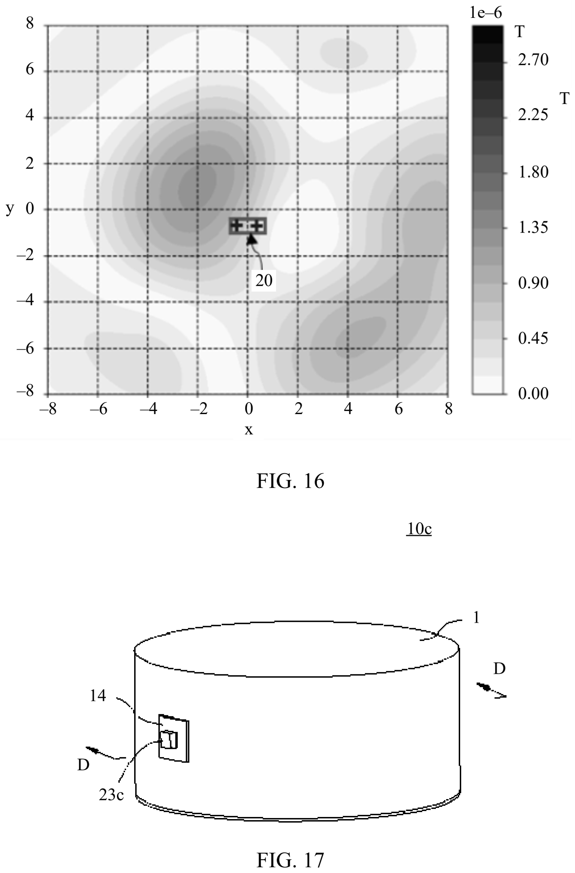

Similarly, in this implementation solution, based on a winding battery cell structure that can reduce a magnetic field of the roll core and a structure configuration of the positive and negative electrode tabs that radially extend out, current sound interference caused by an eddy current magnetic field of the battery can be significantly eliminated. FIG. 16 is a simulation diagram of magnetic field strength formed based on the battery shown in FIG. 12. As shown in FIG. 16, according to this embodiment of this application, a low magnetic field region with a large area may be constructed, and an earphone SPK 20 may be placed in the low magnetic field region, to effectively eliminate noise generated due to the eddy current magnetic field of the battery on the earphone side. In addition, in an application scenario that adapts to an earphone, a battery solution provided based on this solution may be applied to a left earphone and a right earphone. As shown in the figure, two "+" signs in a block are left and right earphone SPKs, respectively. Magnetic field strength at a location of the left SPK is 0.8*10⁻⁶ T to 1.0*10⁻⁶ T, and magnetic field strength at a location of the right SPK is 0.5*10⁻⁶ T to 0.6*10⁻⁶ T. This can simultaneously resolve a problem of eddy current noise in the left and right ears.

For the batteries described in FIG. 1, FIG. 8, and FIG. 12, a power supply dB SPL (decibels measured by a sound pressure level) test is separately performed by using an existing battery in which magnetic field cancellation is performed by using a C-shaped negative electrode connection plate for routing compensation as a comparative example. Test data is shown in Table 3 below.

**Table 3**

| Battery solution | Sample number | | | | |
|---|---|---|---|---|---|
| | 1# | 2# | 3# | 4# | 5# |
| Comparative example test data (dB SPL) | 3.14 | 3.87 | 4.79 | 2.8 | 4.84 |
| Test data (dB SPL) of the embodiment in FIG. 1 | -2.84 | -3.14 | -2.95 | -3.11 | -3.42 |
| Test data (dB SPL) of the embodiment in FIG. 8 | -2.61 | -3.02 | -2.48 | -3.44 | -2.36 |
| Test data (dB SPL) of the embodiment in FIG. 12 | -2.11 | -2.92 | -3.01 | -3.19 | -2.48 |

With reference to the data in the foregoing table, the test dB SPL values of the batteries described in the three embodiments of this application are all obviously less than that of the comparative example, and therefore, impact of generated current sounds is small.

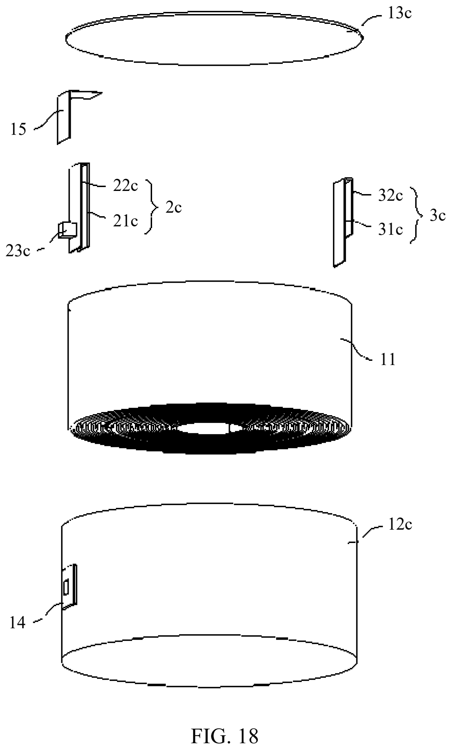

For the battery described in the foregoing embodiments, both the positive electrode tab and the negative electrode tab extend out of the battery cell. In another specific implementation, a full sealing solution may be further used. Refer to FIG. 17 and FIG. 18. FIG. 17 is a diagram of an overall structure of another battery according to an embodiment of this application, and FIG. 18 is an exploded view of assembly of the battery shown in FIG. 17. To clearly show differences and relationships between this implementation and the embodiment in FIG. 1, same functional composition or a same functional structure is illustrated by using a same label in the figures.

As shown in FIG. 17, in this implementation solution, both a positive electrode tab and a negative electrode tab of a battery 10c are disposed inside a battery cell 1, and a positive electrode pole 23c radially extends out of a side wall of a housing of the battery cell 1. With reference to FIG. 18, a roll core 11 of the battery cell 1 is disposed inside the housing enclosed by a bottom housing 12c and a top cover 13c, and one through opening is provided on a peripheral wall of the bottom housing 12c, to facilitate insertion of the positive electrode pole 23c.

In this implementation solution, the positive electrode tab 2c includes a first part 21c and a second part 22c that are formed through axial folding. The first part 21c of the positive electrode tab 2c is electrically connected to an outer ring of a positive electrode plate, the second part 22c of the positive electrode tab 2c is bent and then covers an outer side of the roll core 11, and the positive electrode pole 23c is electrically connected to the second part 22c of the positive electrode tab 2c. For example, but not limited to, the second part 22c may cover a separator on the outer side of the roll core 11, or the second part 22c may cover an insulation layer on the outer side of the roll core 11. This is not limited in this embodiment of this application.

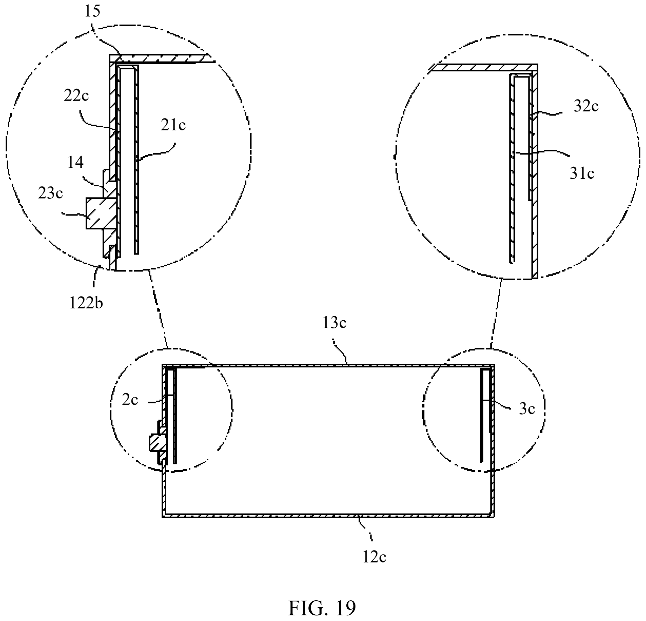

Refer to FIG. 18 and FIG. 19. FIG. 19 is a sectional view of an assembly relationship between the positive electrode tab, the negative electrode tab, and the housing of the battery cell shown in FIG. 18 and FIG. 19. The figure is formed at a sectional location shown as D-D in FIG. 18.

A positive electrode insulation part 14 is disposed between the positive electrode pole 23c and a through opening 121c on a peripheral wall of the bottom housing 12c, and insulation paper 15 is disposed between the positive electrode tab 2c and the housing, to prevent a short circuit. In a specific implementation, the insulation paper 15 may be in a "L" shape shown in the figure, and the second part 22c of the positive electrode tab 2c is isolated from the bottom housing 12c, and a folded connection part between the first part 21c and the second part 22c of the positive electrode tab 2c is isolated from the top cover 13c. It may be understood that the insulation paper 15 is not limited to the shape shown in the figure, provided that the insulation can be implemented.

The negative electrode tab 3c includes a first part 31c and a second part 32c that are formed through axial folding. The first part 31c of the negative electrode tab 3c is electrically connected to an outer ring of a negative electrode plate, the second part 32c of the negative electrode tab 3c is bent and then covers the outer side of the roll core 11, and the second part 32c is electrically connected to the bottom housing 12c. For example, but not limited to, the second part 32c may cover a separator on the outer side of the roll core 11, or the second part 32c may cover an insulation layer on the outer side of the roll core 11. This is not limited in this embodiment of this application.

In this implementation solution, the positive electrode pole 23c disposed on the side wall of the housing is connected to the positive electrode tab 2c to form a positive electrode of the battery cell 1, and the bottom housing 12c and the top cover 13c are connected to the negative electrode tab 3c to form a negative electrode of the battery cell.

In specific implementation, both the first part 31c and the second part 32c of the negative electrode tab 3c are parallel to the roll core in a height direction, and the second part 32c of the negative electrode tab 3c may be connected to an inner wall of the bottom housing 12c in a laser welding manner. For the negative electrode side, a product is directly welded to the housing of the battery cell 1 to form an electrical connection, and the negative electrode tab does not need to be led out or disposed with a separate negative electrode adapter plate. In addition, both the first part 21c and the second part 22c of the positive electrode tab 2c are parallel to the roll core in the height direction, and the second part 22c of the positive electrode tab 2c may be connected to the positive electrode pole 23c in a laser welding manner. The product is directly welded to the positive electrode pole to form an electrical connection, and the positive electrode tab does not need to be led out or disposed with a separate positive electrode adapter plate.

In addition, a reliable electrical connection relationship may be directly formed between the product and the housing of the battery cell 1 by welding through a nickel-plated layer or a tin-plated layer. This is not limited in embodiments of this application.

Other compositions and connection relationships are the same as those in the embodiment described in FIG. 1. Details are not described herein again.

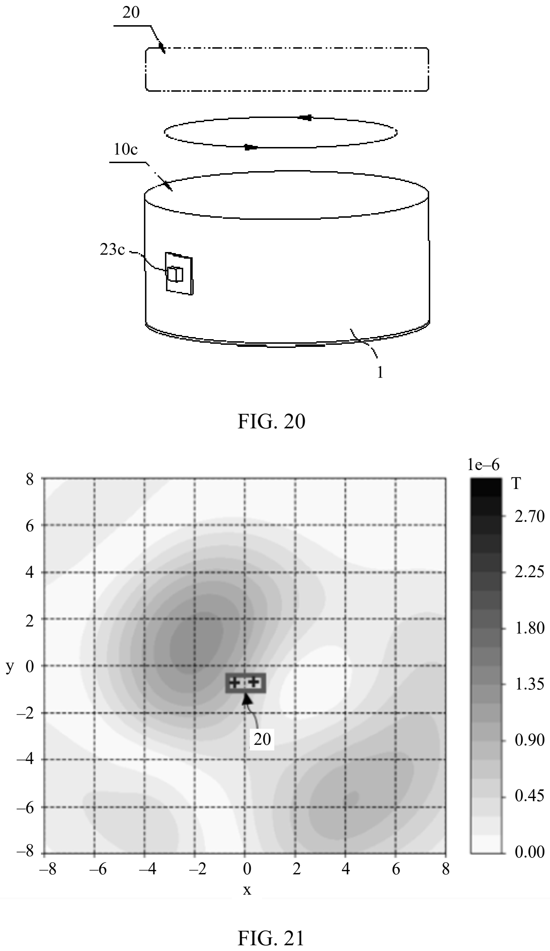

FIG. 20 is a diagram of a use state of the battery shown in FIG. 17. As shown in FIG. 20, an SPK 20 and the battery 10c are disposed opposite to each other in an axial direction of the roll core. In a case in which no compensation plate or lead is added to the outside of the battery, a low magnetic field region with a large area may be formed by significantly reducing the magnetic field of the roll core and adjusting directions of magnetic fields of positive and negative electrode tabs. FIG. 21 is a simulation diagram of magnetic field strength formed based on the battery shown in FIG. 17. An earphone SPK 20 is placed in the low magnetic field region, so that noise generated due to the eddy current magnetic field of the battery on an earphone side can be effectively eliminated. In addition, in an application scenario that adapts to an earphone, a battery solution provided based on this solution may be applied to a left earphone and a right earphone. As shown in the figure, two "+" signs in a block are left and right earphone SPKs, respectively. Magnetic field strength at a location of the left SPK is 0.9*10⁻⁶ T to 1.0*10⁻⁶ T, and magnetic field strength at a location of the right SPK is 0.5*10⁻⁶ T to 0.7*10⁻⁶ T. This can simultaneously resolve a problem of eddy current noise in the left and right ears.

In addition, in this implementation solution, a fully sealed battery structure is used, so that sealing reliability of a battery is further improved on the basis of effectively resolving eddy current noise. This can enhance long-term storage performance of the battery.

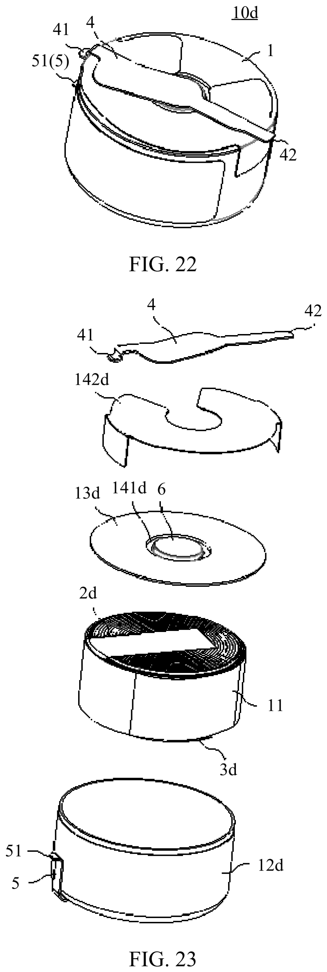

Refer to FIG. 22 and FIG. 23. FIG. 22 is a diagram of an overall structure of another battery according to an embodiment of this application, and FIG. 23 is an exploded view of assembly of the battery shown in FIG. 22. To clearly show differences and relationships between this implementation and the embodiment in FIG. 1, same functional composition or a same functional structure is illustrated by using a same label in the figures.

As shown in FIG. 22, a battery 10d includes a battery cell 1d and a positive electrode connection plate 4 and a negative electrode connection plate 5 that are disposed outside the battery cell 1d, and is electrically connected to an external load through the positive electrode connection plate 4 and the negative electrode connection plate 5.

With reference to FIG. 23, a roll core 11 of the battery cell 1d is disposed inside a housing enclosed by a bottom housing 12d and a top cover 13d.

A positive electrode plate of the roll core 11 is electrically connected to a positive electrode pole 6 through a positive electrode tab 2d, the positive electrode pole 6 extends out through the middle of the top cover 13d, and a material of the positive electrode pole 6 may be aluminum, copper, or nickel. The positive electrode connection plate 4 is electrically connected to an extended end of the positive electrode pole 6, two ends of the positive electrode connection plate 4 extend to sides of the battery cell 1d respectively, one end forms a positive electrode pin 41, and the other end forms a positioning part 42. An insulation layer 141d may be disposed between the positive electrode pole 6 and the top cover 13d, and an insulation layer 142d is disposed between the positive electrode connection plate 4 and the top cover 13d, to avoid a short circuit. For example, but not limited to, both the insulation layer 141d and the insulation layer 142d may be formed by using an insulation tape.

Herein, the positioning part 42 used for battery assembly positioning may be integrated on the positive electrode connection plate 4 as shown in the figure. In another specific implementation, the positioning part may be alternatively independently configured, and may be specifically selectively configured based on a requirement. This is not limited in embodiments of this application.

The negative electrode plate of the roll core 11 is electrically connected to the bottom housing 12d through a negative electrode tab 3d, the negative electrode connection plate 5 is electrically connected to the bottom housing 12d on an opposite side of the positive electrode connection plate 4, and an end of the negative electrode connection plate 5 extends to a side of the battery cell 1d to form a negative electrode pin 51.

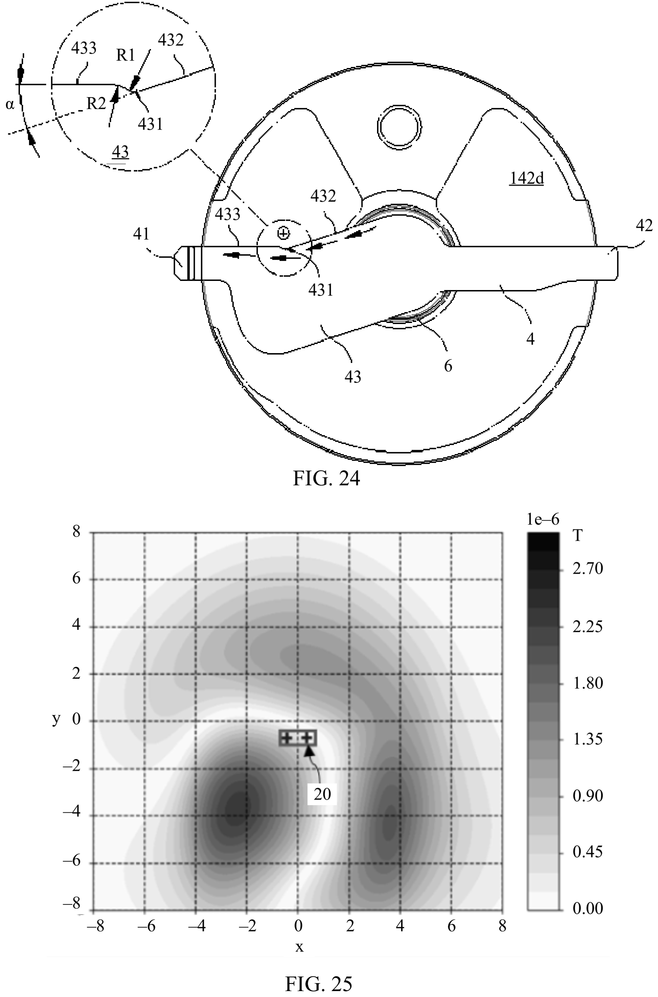

In this implementation solution, a conductor section 43 is between the positive electrode pin 41 of the positive electrode connection plate 4 and a connection location between the positive electrode connection plate 4 and the positive electrode pole 6, and a groove 431 is provided on a side edge of the conductor section 43. FIG. 24 is a top view of the battery shown in FIG. 22.

Two sides of the groove 431 are a first side edge 432 and a second side edge 433 that are disposed at an included angle, the first side edge 432 and the second side edge 433 are both straight side edges, and an inner concave arc section R1 and an outer convex arc section R2 that are sequentially connected exist between the first side edge 432 and the second side edge 433, to form the groove 431. Based on the groove 431 disposed on the side edge of the positive electrode connection plate 4, currents from the side of the positive electrode pole 6 to the side of the positive electrode pin 41 flow to the groove 431 in a centralized manner (as shown by arrows in the figure), and distribution of the currents on the conductor section 43 are accurately controlled by using a skin effect principle. In other words, current paths in a compensation loop are controlled based on the disposition of the groove 431, instead of being evenly distributed in other regions of the conductor section 43.

It may be understood that the positive electrode connection plate 4 may be a sheet-like structure of any shape instead of being limited to the shape shown in the figure, and a "current control region" is formed based on a side edge configuration, which has obvious current sound cancellation effect. Optionally, an included angle α between the second side edge 433 and a reverse extension line P of the first side edge 432 on the side of the conductor section 43 may range from 10° to 30°, and the formed groove 431 has good compensation effect.

Without loss of generality, a current path formed by the groove 431 shown in FIG. 13 is used as an example, and a formed compensation magnetic field is perpendicular to a paper surface and faces inward. In this way, a relative location of the compensation magnetic field in a winding plane may be controlled and adjusted by controlling a current flow direction based on a shape of the groove 431, that is, the "current control region" is formed by using the groove 431 provided on the side edge of the conductor section 43. Therefore, a reverse cancellation magnetic field formed by the positive electrode connection plate 4 is highly coincident with the magnetic field of the roll core body, to accurately cancel the magnetic field of the roll core body and eliminate a current sound.

FIG. 25 is a simulation diagram of magnetic field strength formed based on the battery shown in FIG. 22. As shown in FIG. 25, according to this embodiment of this application, current density distribution of the positive electrode connection plate may be adjusted, magnetic field distribution of the current may be precisely controlled, the low magnetic field region is formed in a specific region of the battery, and the earphone SPK 20 may be placed in the low magnetic field region, to effectively eliminate noise generated due to the eddy current magnetic field of the battery on the earphone side. In addition, in an application scenario that adapts to an earphone, a battery solution provided based on this solution may be applied to a left earphone and a right earphone. As shown in the figure, two "+" signs in a block are left and right earphone SPKs, respectively. Magnetic field strength at a location of the left SPK is 0.3*10⁻⁶ T to 0.6*10⁻⁶ T, and magnetic field strength at a location of the right SPK is 0.3*10⁻⁶ T to 0.6*10⁻⁶ T. This can simultaneously resolve a problem of eddy current noise in the left and right ears.

In addition, in a specific implementation, the first side edge 432 and the second side edge 433 may be connected through an arc section of another shape to form the groove, which may be specifically determined based on an overall design requirement of a product. For example, but not limited to, the groove may further be formed by an arc or a plurality of arcs, provided that the current control region can be formed when power is supplied.

In another implementation, based on different magnetic field directions of the roll core body, the groove configured to control the current flow path may also be provided reversely on the other side edge of the conductor section 43 (not shown in the figure). In another possible implementation, the groove configured to control the current flow path may be further provided on a side edge (not shown in the figure) of the negative electrode connection plate, so that the relative location of the compensation magnetic field in the winding plane can also be precisely controlled. In another possible implementation, the groove configured to control the current flow path may be further provided on a side edge of the positive electrode tab and/or the negative electrode tab inside the battery cell, so that the positive electrode tab and the negative electrode tab of the battery cell form a current sound compensation plate, to eliminate the eddy current magnetic field.

In addition, the positive electrode connection plate 4 and the negative electrode connection plate 5 may be respectively located on two sides of the battery 10d as shown in the figure. In another possible implementation, the positive electrode connection plate 4 and the negative electrode connection plate 5 may alternatively be located on a same side (not shown in the figure) of the battery.

For the battery described in FIG. 22, a power supply dB SPL (decibels measured by a sound pressure level) test is separately performed by using an existing battery in which magnetic field cancellation is performed by using a C-shaped negative electrode connection plate for routing compensation as a comparative example. Test data is shown in Table 4 below.

**Table 4**

| Battery solution | Sample number | | | | |
|---|---|---|---|---|---|
| | 1# | 2# | 3# | 4# | 5# |
| Comparative example test data (dB SPL) | 3.14 | 3.87 | 4.79 | 2.8 | 4.84 |
| Test data (dB SPL) of the embodiment in FIG. 22 | -0.7 | -1.2 | -1.4 | -1.05 | -1.6 |

With reference to the data in the foregoing table, the test dB SPL values of the battery described in FIG. 22 in this application are all obviously less than that of the comparative example, and therefore, impact of generated current sounds is small.

An embodiment of this application further provides an electronic device. The electronic device includes a battery and a load device. The load device is electrically connected to a positive electrode and a negative electrode of the battery. The battery may be the battery described in FIG. 1, FIG. 8, FIG. 12, FIG. 17, and FIG. 22.

The electronic device may be a product type including a load device, for example, but not limited to a loudspeaker of an earphone. It should be understood that other functions of a corresponding electronic device are not a core invention point of this application. Therefore, details are not described in this specification.

The above are only the preferred implementations of the present invention, and it should be noted that for a person of ordinary skill in the art, several improvements and modifications may be made without departing from the principle of the present invention, and these improvements and modifications should also be regarded as falling within the protection scope of the present invention.

## Claims

1. A battery, comprising a battery cell, wherein the battery cell comprises a housing, a roll core, a positive electrode tab, and a negative electrode tab, and the roll core is disposed inside the housing and is formed by winding a negative electrode plate, separators, and a positive electrode plate; in a circumference direction of the roll core, the positive electrode tab is electrically connected to the positive electrode plate at a first location, and the negative electrode tab is electrically connected to the negative electrode plate at a second location, wherein a winding end of the positive electrode plate extends beyond a winding end of the negative electrode plate, and the first location is any location at which the positive electrode plate extends beyond the winding end of the negative electrode plate; and a part of the positive electrode plate between the second location and the first location is a positive electrode extension section, at least an inner surface of the positive electrode extension section is passivated, and the inner surface is a surface of a side that is of the positive electrode extension section and that faces the negative electrode plate.

2. The battery according to claim 1, wherein that the inner surface of the positive electrode extension section is passivated is specifically that a surface of a substrate on the inner surface of the positive electrode extension section is not coated with a positive electrode material.

3. The battery according to claim 1, wherein that the inner surface of the positive electrode extension section is passivated is specifically that the inner surface of the positive electrode extension section is coated with an insulation layer or a barrier material layer.

4. The battery according to claim 1, wherein that the inner surface of the positive electrode extension section is passivated is specifically that density of a positive electrode material on the inner surface of the positive electrode extension section is lower than density of a negative electrode material of the negative electrode plate.

5. The battery according to claim 1, wherein that the inner surface of the positive electrode extension section is passivated is specifically that thickness of a positive electrode material on the inner surface of the positive electrode extension section is less than thickness of a positive electrode material in another region of the positive electrode plate.

6. The battery according to claim 5, wherein an outer side of the positive electrode material of the positive electrode extension section is coated with an insulation layer.

7. The battery according to any one of claims 1 to 6, wherein an outer surface of the positive electrode extension section is coated with an insulation layer or a separator, and the outer surface is a surface of a side that is of the positive electrode extension section and that is away from the negative electrode plate.

8. The battery according to any one of claims 1 to 6, wherein a winding angle formed by the positive electrode extension section of the positive electrode plate ranges from 270° to 300°.

9. The battery according to claim 1, wherein both the positive electrode tab and the negative electrode tab are axially disposed, the positive electrode tab axially extends out of a first through opening on the housing, to form a positive electrode pin of the battery, and the negative electrode tab axially extends out of a second through opening on the housing, to form a negative electrode pin of the battery.

10. The battery according to claim 9, wherein the positive electrode pin and the negative electrode pin are located on a same side of the housing, or the positive electrode pin and the negative electrode pin are respectively located on two sides of the housing.

11. The battery according to claim 1, wherein the positive electrode tab comprises a positive electrode tab connection part and a positive electrode pin part that are connected, the positive electrode tab connection part comprises a first part and a second part that are formed through axial folding, the first part of the positive electrode tab connection part is electrically connected to the positive electrode plate, the second part of the positive electrode tab connection part covers an outer side of the roll core, and the positive electrode pin part is connected to the second part of the positive electrode tab connection part and radially extends out from a first through opening on the housing; and
the negative electrode tab comprises a negative electrode tab connection part and a negative electrode pin part that are connected, the negative electrode tab connection part comprises a first part and a second part that are formed through axial folding, the first part of the negative electrode tab connection part is electrically connected to the negative electrode plate, the second part of the negative electrode tab connection part covers the outer side of the roll core, and the negative electrode pin part is connected to the second part of the negative electrode tab connection part and radially extends out from a second through opening on the housing.

12. The battery according to claim 11, wherein the second part of the positive electrode tab connection part covers the separator on the outer side of the roll core, or covers an insulation layer on the outer side of the roll core; and the second part of the negative electrode tab connection part covers the separator on the outer side of the roll core, or covers the insulation layer on the outer side of the roll core.

13. The battery according to claim 1, further comprising a positive electrode pole, wherein a first through opening is provided on a peripheral wall of the housing, and the positive electrode pole is inserted into the first through opening;
the positive electrode tab comprises a first part and a second part that are formed through axial folding, the first part of the positive electrode tab is electrically connected to the positive electrode plate, the second part of the positive electrode tab covers an outer side of the roll core, and the positive electrode pole is electrically connected to the second part of the positive electrode tab; and
the negative electrode tab comprises a first part and a second part that are formed through axial folding, the first part of the negative electrode tab is electrically connected to the negative electrode plate, the second part of the negative electrode tab covers the outer side of the roll core, and the second part is electrically connected to the housing.

14. The battery according to claim 13, wherein the second part of the positive electrode tab covers the separator on the outer side of the roll core, or covers an insulation layer on the outer side of the roll core; and the second part of the negative electrode tab covers the separator on the outer side of the roll core, or covers the insulation layer on the outer side of the roll core.

15. The battery according to any one of claims 9 to 14, wherein insulation paper is disposed between the positive electrode tab and an inner wall of the housing, and a positive electrode insulation part is disposed between the positive electrode tab and the first through opening of the housing.

16. The battery according to any one of claims 1 to 6, further comprising a positive electrode pole and a positive electrode connection plate, wherein the positive electrode pole axially extends out of the housing, the positive electrode plate is electrically connected to the positive electrode pole through the positive electrode tab, and the negative electrode plate is electrically connected to the housing through the negative electrode tab; and
the positive electrode connection plate is electrically connected to an extended end of the positive electrode pole, and extends to a side of the battery cell to form a positive electrode pin of the battery; and a conductor section is between the positive electrode pin of the positive electrode connection plate and a connection location between the positive electrode connection plate and the positive electrode pole, a groove formed by an arc section is provided on a side edge of the conductor section, a first side edge and a second side edge that are disposed at an included angle are provided on two sides of the groove, and both the first side edge and the second side edge are straight side edges.

17. The battery according to claim 16, wherein the arc section comprises an inner concave arc section and an outer convex arc section that are sequentially connected between the first side edge and the second side edge, and an included angle α between the second side edge and a reverse extension line of the first side edge on the side of the conductor section ranges from 10° to 30°.

18. The battery according to claim 16, wherein the arc section is an arc connected between the first side edge and the second side edge, or the arc section comprises a plurality of arcs connected between the first side edge and the second side edge; and an included angle α between the second side edge and a reverse extension line of the first side edge on the side of the conductor section ranges from 10° to 30°.

19. The battery according to claim 16, wherein an insulation layer is disposed between the positive electrode connection plate and an end surface of the housing, and an insulation layer is disposed between the positive electrode pole and the housing.

20. A battery, comprising a battery cell, wherein the battery cell comprises a housing, a roll core, a positive electrode tab, a negative electrode tab, and a positive electrode pole, and the roll core is disposed inside the housing, and is formed by winding a negative electrode plate, separators, and a positive electrode plate; the positive electrode pole axially extends out of the housing; and the positive electrode plate is electrically connected to the positive electrode pole through the positive electrode tab, and the negative electrode plate is electrically connected to the housing through the negative electrode tab; and
the positive electrode connection plate is electrically connected to an extended end of the positive electrode pole, and extends to a side of the battery cell to form a positive electrode pin of the battery; and a conductor section is between the positive electrode pin of the positive electrode connection plate and a connection location between the positive electrode connection plate and the positive electrode pole, a groove formed by an arc section is provided on a side edge of the conductor section, a first side edge and a second side edge that are disposed at an included angle are provided on two sides of the groove, and both the first side edge and the second side edge are straight side edges.

21. The battery according to claim 20, wherein the arc section comprises an inner concave arc section and an outer convex arc section that are sequentially connected between the first side edge and the second side edge, and an included angle α between the second side edge and a reverse extension line of the first side edge on the side of the conductor section ranges from 10° to 30°.

22. The battery according to claim 20, wherein the arc section is an arc connected between the first side edge and the second side edge, or the arc section comprises a plurality of arcs connected between the first side edge and the second side edge; and an included angle α between the second side edge and a reverse extension line of the first side edge on the side of the conductor section ranges from 10° to 30°.

23. An electronic device, comprising a battery and a load device electrically connected to the battery, wherein the battery is the battery according to any one of claims 1 to 22.

24. The electronic device according to claim 23, wherein the load device is a speaker.
